(19) Europäisches Patentamt
European Patent Office
Office européen des brevets

(11) Publication number : **0 294 455 B1**

(12) # EUROPEAN PATENT SPECIFICATION

(45) Date of publication of patent specification : **28.08.91 Bulletin 91/35**

(51) Int. Cl.$^5$ : **G01M 3/22**

(21) Application number : **88900615.1**

(22) Date of filing : **22.10.87**

(86) International application number : **PCT/US87/02706**

(87) International publication number : **WO 88/04774 30.06.88 Gazette 88/14**

(54) **A METHOD OF INCREASING THE SENSITIVITY OF A LEAK DETECTOR IN THE PROBE MODE.**

(30) Priority : **19.12.86 US 944321**

(43) Date of publication of application : **14.12.88 Bulletin 88/50**

(45) Publication of the grant of the patent : **28.08.91 Bulletin 91/35**

(84) Designated Contracting States : **CH DE FR GB IT LI**

(56) References cited :
**EP-A- 0 194 836**
**GB-A- 2 123 153**
**US-A- 3 578 758**
**US-A- 3 672 207**

(56) References cited :
**US-A- 3 888 111**
**US-A- 4 492 110**
**US-A- 4 583 394**
**Patent Abstracts of Japan, volume 9, no. 203 (P-381)(1926), 21 August 1985, & JP, A, 6066127**

(73) Proprietor : **Martin Marietta Corporation**
**6801 Rockledge Drive**
**Bethesda Maryland 20817 (US)**

(72) Inventor : **BERQUIST, Lyle, E.**
**2676 East Otero Place Apartment 11**
**Littleton, CO 80122 (US)**

(74) Representative : **Thomas, Roger Tamlyn et al**
**D. Young & Co. 10 Staple Inn**
**London WC1V 7RD (GB)**

**EP 0 294 455 B1**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to an improved noble gas leak detector and a process for detecting leaks in test objects, especially for small components, such as electronic circuit components.

The reliability of small electronic components depends to a great extent upon how well the component is hermetically sealed from reactive gases and water vapor. The test for determining the adequacy of the hermetic seal is important.

Presently, there are several methods for determining the leak rate in small electronic components. Several methods require that the electronic component be exposed to or "bombed" with a gas. Typically, the gas is helium or sometimes argon or krypton. After exposing the electronic component for a specified time and pressure to the gas, the component is removed and tested for leaks. Breaks or defects in the hermetic seal are revealed by the gas which has infiltrated the component and which is detected as a "leak" when the gas flows out of a break or defect in the hermetic seal. The tests are designed either for gross or large leaks or for fine or small leaks.

Other gross leak test methods have also been used. One such method involves exposing a small electronic component to a gas and measuring the weight gain. Another involves exposing the component to a hydrocarbon gas and measuring the hydrocarbon vapor released while pressurizing the component with another gas.

Finally, leak tests on electronic components have employed mass spectrometers. One such device is illustrated in U.S Patent US-A-3,578,758. Although helium leak detectors have been used for fine leak testing small electronic components, one disadvantage is that present helium leak detectors are not totally suited for detecting large leaks in small component test objects. If a component having a large leak is subjected to a helium leak detector, all the helium may be exhausted out of the component by the vacuum system before detection measurement. In any event, such a helium leak detector reduces the apparent size of a large leak. In general, present helium leak detectors for small electronic components have inadequate sensitivity range.

Getter pumps which have been employed in ultra sensitive leak detectors (e.g., U.S. Patent US-A-4,492,110) have not been employed in leak detectors for small components since getters are unable to quickly handle the relatively large volume of purge carrier gas which must be employed in helium leak detecting small components. US-A-4,492,110 uses a nonevaporable getter pump connected to the vacuum chamber.

Cryogenic pumps have been previously employed in creating vacuums. One deficiency of a typical cryogenic pump is that it is unable to handle a relatively large volume of purge carrier gas used in leak detecting small components. Adsorption of a large volume of gas warms up the cryogenic pump which results in desorption of the purge carrier gas. That in turn raises the pressure to an unacceptable level for the mass spectrometer. Secondly, cryogenic pumps adsorb helium and may later desorb helium which destroys the efficacy of the detection of helium by the mass spectrometer. U.S. Patent US-A-4,593,530 to Longsworth, teaches cold surfaces that freeze water and nitrogen and additionally freezes helium using charcoal as cold adsorbent.

U.S. Patent US-A-4,608,866, on which the introductory part of claim 1 of the present specification is based describes a leak detector where a modified cryogenic pump is connected to a vacuum chamber in such position to allow the cryogenic pump to entrap a purge carrier gas, such as nitrogen, but not entrap the detecting gas, such as helium, which is passed to a mass detector. A system of valves serves to divert the gases leaving the vacuum chamber into the cryopump and then to return them to the main pipeline for onward passage to the mass detector.

All of the known leak detector systems discussed above are closed systems, i.e. the test specimen or its container is subjected to a vacuum. The disadvantage of the prior systems, i.e. lack of sensitivity and ability to detect both large and small leaks, have now been overcome by the instant open system leak detector system. While the sensitivity of US-A-4,608,866 is good, the present invention using an "open system" allows the rapid checking of individual small components and the rapid identification of the defective leak areas without the limitation of placing the test object under high vacuum.

Patent Abstracts of Japan, volume 9, no. 203 (P-381) (1926), JP-A-6066127 (Tokuda Seisakusho K.K.) includes a block diagram showing a series connection comprising an object to be tested, a cryopump, an absorption pump and a helium leakage detector. Gases other than helium, neon and hydrogen are exhausted by the cryopump and neon and hydrogen are absorbed by the absorption pump.

The present invention is directed to an "open system" apparatus and process for detecting gas leakage from a test object.

The invention provides an apparatus for detecting gas leakage from a test object, comprising container means for receiving and enveloping test objects containing helium, said container means containing, in operation, purified nitrogen which surrounds the test object ; conducting means in communication with the container means for conducting a flow of helium and nitrogen from the container means directly to a cryogenic pump separator means, the separator means being arranged to receive all of the helium and nitrogen flowing through said conducting means and configured for separating the helium from the nitrogen and for retaining a sufficient quantity of the nitrogen to greatly increase the ratio of helium to nitrogen exiting the separator means ; mass spectrometer means connected for fluid communication with the separator means for detecting the helium exiting from the separator means and for providing an output signal indicative of the presence of and amount of helium if there is leakage of helium from the test object ; and a pump means connected in direct fluid communication with the mass spectrometer means and which functions to exhaust the measured helium to the atmosphere ; characterised in that the conducting means comprises a movable sniffer probe, or a probe in a container means which is a movable part which can be placed over the test object carried on a conveyor means for removing nitrogen, and helium if there is leakage, from the container means, the nitrogen in the container means being at a pressure of about 1 atmosphere ($1.013 \times 10^5$ Pa), and in that said probe, said cryogenic pump separator means and said mass spectrometer means are connected in series.

In one embodiment, the test component is positioned in a container, for example a glove box chamber having a movable probe therein for conducting a flow of gas from locations adjacent to the test object to the cryogenic pump gas separator means (entrainment pump). The size of the container may vary widely, depending on the size and quantity of the items to be tested. The entrainment pump is in gaseous communication with the glove box through interconnecting passages and a movable probe having a sniffer valve. Vapor flow between the test chamber and the entrainment pump is controlled by the sniffer valve. The entrainment pump which is in direct gaseous communication with the leak detector through an optional valve is a cryogenic pump or a combination thereof with a nonevaporable getter pump. A mechanical pump in series with a diffusion or turbomolecular pump exhausts the measured helium to the atmosphere after it is detected in the mass spectrometer. The pressure of gas at the mass spectrometer is measured by a vacuum gauge and must be less than $1 \times 10^{-4}$ Torr ($1.33 \times 10^{-2}$ Pa).

A second aspect of the invention is a process for detecting leaks using the above described apparatus, comprising purging the container means by introducing nitrogen, introducing the test object containing helium into the container means, removing gas in the vicinity of the object with the probe and passing it through the separator means where the ratio of helium, if any, to nitrogen is greatly increased, and to the mass spectrometer means which detects the presence of helium, and thereafter exhausting any helium from the mass spectrometer means to atmosphere using the pump means. Purified nitrogen is the second gas, sometimes referred to as carrier gas, and the first gas (sometimes referred to as detector gas) is helium ; the test object is sniffed with a movable probe in an open system, such as a nitrogen "glove box", using high purity nitrogen at approximately 1 atmosphere ($1.013 \times 10^5$ Pa) and the gas captured in the vicinity of the test object is conducted via the probe to the entrainment pump. The entrainment pump selectively removes the nitrogen carrier gas and passes the helium detector gas to the mass spectrometer.

In another embodiment of the invention, the container is a movable mechanism that can be placed over and envelope the test object passing on a production conveyor mechanism and can be rapidly moved sequentially from one test object to another.

A preferred feature of the invention is the use of an improved cryopump, wherein the pressure in the cryopump is reduced by about a factor of 1,000 by expansion, by a factor of 4 by internal cooling and by a factor of 6,000 by adsorption of nitrogen gas on the cooled surface of the cryopump.

In the present "open system" apparatus, detector gas in the vicinity of the test object in the glove box is preferably conveyed via a needle valve probe to a gas separator means at a gas flow rate about 2 Torr (266 Pa) litre/sec. By using the entrainment pump between the probe and the detector, the amount of gas entering the probe may be increased by at least a factor of 1,000 with a similar increase in the collection efficacy of the helium. Since such system allows a greater amount of gas to be collected, a greater percentage of helium coming from the leak in the test specimen enters and is measured in the mass spectrometer means at an operable pressure level. The entrainment pump is designed to remove the nitrogen carrier gas, while allowing all of the helium escaping from the test specimen to be measured in the mass spectrometer means. The entrainment pump which is situated between the probe and the mass spectrometer means removes active gas but does not adsorb helium. Suitable "entrainment pumps" can be a cryogenic pump alone or with a nonevaporable getter pump as disclosed in US Patents US-A-4,608,866 and US-A-4,492,110, respectively. An advantage of the preferred leak detector system resides in the fact that the entrainment pump can separate large quantities of purified nitrogen gas (up to 400 atmosphere liters) while passing all of the helium gas originating from a leak in the test object.

The process of the present invention differs from US-A-4,492,110 and US-A-4,608,866 in that the test object is positioned in a container or "glove box" having a controlled atmosphere of helium-free nitrogen at about 1 atmosphere ($1.013 \times 10^5$ Pa). Heretofore, helium gas leak detector systems of this kind have used test objects in a closed system, i.e. in a vacuum chamber or under reduced pressure. In contrast, the process of the present invention allows the test object to be located in a container under ambient conditions of temperature and pressure with a purified nitrogen blanket. Using the present "open system", the sensitivity is remarkably increased for several reasons. Since a large amount of carrier gas can be sorbed in the entrainment pump, a larger amount of helium gas can be detected in the typical mass spectrometer detector ; the helium normally found in air is greatly reduced because of the nitrogen purge. Such a system allows the valve V1, in proximity with the probe, to be opened wider, while still maintaining a relatively low pressure in the leak detector.

Another preferred aspect of the present invention is the use of an improved cryopump which is particularly useful as the entrainment pump in the present invention. The cryopump has an outer jacket within the pump that is cooled to about 80°K, and an inner section cooled to about 10°K-22°K and preferably maintained at 18°K-20°K. The cryopump is designed to ensure that the gas entering the entrance valve of the cryopump will impinge directly on the 80°K surface and will lose at least about 50 percent of its heat before passing to the 10°K-22°K inner surface where the nitrogen freezes out. This result is effected by directing the incoming mixture of helium and nitrogen gases from the probe means through a tube (approximately 1/4" (6.35 mm) in diameter) to cause the gases to impinge directly on the 80°K surface until it equilibrates and removes at least about 50 percent of the heat before passing to the 10°K-22°K surface. The presence of a copper metal entrance baffle projecting inwardly from the 80°K surface in the vicinity of the gas inlet helps to establish this equilibration by acting as a barrier to the free passage of gas to the inner cooling surface.

The term "container means" designates any container that houses the test object under a cover of protective nitrogen, that is helium free and maintained at or about 1 atmosphere ($1.013 \times 10^5$ Pa) pressure. In practice, the pressure within the container will vary slightly below or above 1 atmosphere ($1.013 \times 10^5$ Pa), depending on the amount of protective gas and the degree of opening of sniffer valve V1 which can be independently regulated. In one embodiment, the container is a glove box that has ports to allow the manual or mechanical handling of the test object and the placement of the probe along the various perimeters of the test object. Other embodiments include high speed conveyor belt production testing.

The carrier gas (nitrogen) must be essentially free of helium, i.e., less than one part helium per trillion parts nitrogen. Such "helium free" nitrogen can be purchased commercially or can be generated from liquid nitrogen.

The movable probe is disposed in the container means. Probing of the test piece in the glove box is often referred to as "sniffing" with a "sniffer" probe. The test object is pressurized with helium gas and the probe mechanism can consist of a needle valve connected to a metal bellows tubing for flexibility and mobility. In such fashion, the probe is moved about the test object, which may be a single or multi-compartmented device.

As indicated above, the separator means can include a typical nonevaporable getter as disclosed in US-A-4,492,110 in addition to a cryogenic pump. Preferred metallic-type getters are those having multiple barriers for contact and removal of the carrier gas. Preferred getter surfaces are metallic powder surfaces or metallic powder including cerium-rubidium alloys, and alloys of tantalum, titanium, zirconium and rare earth elements such as hafnium. When the entrainment pump includes a getter pump, it is preferred to use a multiple baffle with a powdered metal surface which is heated. The most preferred getter is one packed with such alloy powders. Suitable getters which are available commercially include SAES getters and the nonevaporable getters (Hy-Stor 504) available from Ergenics Company, Inc.

Alternatively, the "entrainment pump" may consist of a modified cryopump as set forth in US-A-4,608,866.

The modified cryogenic pump employed in the present invention is generally kept at a temperature from about 10°K to about 22°K, preferably from about 18°K to about 20°K. As shown in US-A-4,608,866, a conventional cryogenic pump is modified for purposes of the present invention by (i) the addition of a heater to keep the cryogenic pump at the above specified temperatures, (ii) the addition of lead to the cooling surfaces, and (iii) the removal of any material, such as charcoal, which would adsorb the detecting gas, helium. A conventional cryogenic pump is modified by adding a heater in order to keep the cryogenic pump at a temperature from about 10°K to about 22°K, preferably from about 18°K to about 20°K. A conventional cryogenic pump has charcoal designed to entrap helium. According to the present invention, the charcoal must be removed from the cryogenic pump so as not to entrap the detecting gas, helium. The conventional cryogenic pump is further modified in order to add lead to the cooling fins or jet. This adds thermal mass to those surfaces. Lead has a much greater specific heat than copper at low temperatures and thus serves to quickly absorb the heat of the nitrogen purge carrier gas without heating the system or raising the pressure for the mass spectrometer. The modified cryogenic pump used in the present invention can easily absorb the volume of purge carrier gas, i.e., 2 standard cubic centimeter per second.

The 10°K-22°K surface must be maintained at temperature to ensure the entrapment of the purge carrier gas (nitrogen). If only the charcoal (which adsorbs helium) is removed from an otherwise conventional cryogenic pump and the cryogenic pump is operated at its typical operating temperature, below about 10°K, helium can stick to the nitrogen ice in the cryogenic pump. Thus, the modifications, in accordance with the present invention, are designed to keep the cryogenic pump at a temperature from about 10°K to about 22°K, preferably from about 18°K to about 20°K. Above about 22°K, the cryogenic pump starts to desorb nitrogen. When the cryogenic pump fills up with frozen nitrogen, about 400 atmospheric liters, the cryogenic pump can be regenerated in accordance with normal procedures.

The present invention is also directed to a process for detecting leaks in objects, such as small electronic components. The process of the present invention employs the foregoing apparatus and uses a purge carrier gas, (nitrogen), to purge the container before introducing the electronic components. The purge carrier gas is necessary in order to eliminate the presence of any detecting gas, helium, in the system except for that which is carried by the test object. The modified cryogenic pump can be employed as the sole entrainment pump to evacuate and trap the purge carrier gas or alternatively can be used with other getter pumps. A mass spectrometer is then employed to detect all of the helium leaked from the test object, thus indicating the presence of any leaks. If helium is detected, its origin and amount represent a signal corresponding to a leak in the test object.

The detector gas passes from the exit port of the entrainment pump and is analyzed in a mass spectrometer 18 which is connected by interconnecting passages with the gas separator (entrainment pump) and movable probe. If desired, the gas passing to the mass spectrometer can be regulated by an additional valve located between the separator exit and the mass spectrometer. The mass spectrometer can be a magnetic sector spectrometer or quadruple mass spectrometer, the latter being preferred.

Another advantage of the present invention is that the apparatus and process can have a large sensitivity dynamic range encompassing large leak rates from about 2 atmosphere cc/sec to about $10^{-12}$ atmosphere cc/sec.

Preferred embodiments of the invention will now be described by way of example with reference to the drawings in which :

Fig. 1 schematically shows in block diagram form a first embodiment of a small component helium leak detector of the present invention ;

Fig. 2 depicts a cross-sectional view of an improved cryopump ;

Fig. 3 is a top view of the improved cryopump ; and

Fig. 4 is a cross-sectional view of an alternative container (second embodiment of the invention) to the sniffer valve in Fig. 1 for receiving test objects showing relative positions of the gas sampling valve (probe) and the test object.

Operation of the apparatus depicted in Fig. 1 and the process of the present invention will now be described. A small component to be leak detected is exposed or bombed with the detecting gas, such as helium. Typically, the component is subjected to helium at a pressure from about 30 psi (206.85 kPa) to about 60 psi (413.7 kPa) to inject any helium into the component. The purpose is to detect any helium that gets into any breaks in the hermetic seal and leaks back out during the test.

A purge carrier gas (purified nitrogen) is introduced into the glove box 14 at a pressure equal to or only slightly above atmospheric pressure to replace the air. While introducing the purge gas, the test components 12 to be leak tested are inserted into the glove box 14. On opening the probe valve V2, gas and helium from the leak, if any, is evacuated into the entrainment pump 16 though the sniffer valve V1. The entrainment pump 16 entraps the nitrogen but does not entrap the helium. All of the helium which may be leaking from the test component 12 remains in a gaseous phase and passes to the mass spectrometer 18.

Nonmetallic parts in the leak detector system 10 are to be avoided since nonmetallic parts can adsorb and then desorb helium, thus contributing to undesirable background. Preferably, all connecting means between valves and passages or between passages and functional units are constructed of mating flanges made of metal and metal gaskets. Using all metal seals and metallic vacuum system for the leak detector reduces the helium background in the system and the possibility of helium permeating through 0-rings. Another advantage of the leak detection system is that it can be operated with a single valve, namely V1, the sampling-sniffer valve. Using only one valve significantly reduces the cost of the entire system.

The "open" system is an improvement over prior leak detectors because it uses a cryogenic pump located between the sampling probe, located within the glove box 14 in Fig. 1, and the mass spectrometer 18. The entrainment separator pump 16 which comprises a modified cryopump, removes the nitrogen and allows the helium to flow to the mass spectrometer 18, be detected and then exhausted to the atmosphere using diffusion or turbomolecuar pump 22 and mechanical pump 24. This allows for a much larger amount of gas to flow into the sampling probe which increases the collection efficiency of helium as it emanates from the device under test.

Normal air has 5 ppm of helium. If one pumps into the system, air at 1 scc/sec, the helium background from air is equivalent to a leak of $5 \times 10^{-6}$ scc/sec. This invention requires nitrogen gas which is essentially free of helium, i.e. less than about one part per trillion. By purging the glove box with purified nitrogen, the helium background is reduced several decades. Thus, if helium is detected, it is coming from the device under test.

A preferred method for obtaining the pure nitrogen carrier gas is to permit liquid nitrogen to evaporate. Evaporated liquid nitrogen results in a gas having helium impurities less than about one part per trilion.

By regulating the amount of carrier gas passing to the entrainment pump 16 through valve V1, the same leak detection system 10 can be used to detect both gross and fine leaks, thus simplifying available test apparatus needed for leak checking small electronic components.

For economy purposes, valve V2 between the exit of the entrainment pump 16 and the mass spectrometer 18 can be eliminated if desired. However, it is useful in protecting the cryopump 16 during periods of waiting or line shut down or for regeneration purposes.

An improved cryopump 16, contained within housing chamber 36 and useful for purposes of the present apparatus and process, is shown in Fig. 2 and Fig. 3. The pump is similar to the cryopump described in US-A-4,608,866 but has certain important modifications. Referring to Fig. 2, nitrogen and helium gas from the probe proceeds via probe valve 38 through a stainless steel inlet tube 40 having a diameter of up to about 0.50 inch (12.7 mm) and preferably no larger than about 0.25 inch (6.35 mm). Tube 40 terminates internally within the cryopump chamber 16 at an outlet which provides a gas entrance port 42. Port 42 and metal gas inlet baffle 46 are directed to divert the gas to impinge on the cooled 80°K inner lining cooling surface 44 and to equilibrate the gas with surface 44 and remove at least about 50% of the gas heat before allowing the gas to pass internally to the 10°K to 22°K cooling surface 48. Surface 48 is fabricated entirely of lead and has multiple lead arrays or fins 47.

Tube 40 is secured to the inner lining cooling surface 44 with a stainless steel shim 49 of about.001 inch (25.4 × $10^{-3}$ mm) thickness. The shim 49 controls flc • of gas internally and prevents any passage of incoming gas through the volume 54 between the housing chamber and the 80°K cooling surface 44.

The metal entrance baffle 46, preferably fabricated of copper metal, is in contact with and projects inwardly from the 80°K surface 44 in the vicinity of port 42 and serves to enhance the equilibration and cooling at the surface 44 by restricting and redirecting the flow of gas from port 42. This baffle 46 contributes to the energy dissipation and cooling on the 80°K surface by temporarily restricting the gas flow inward to the 10°K to 22°K surface 48 where the nitrogen condenses and freezes. An exit baffle 50, a multi-fin component fabricated of the same material, preferably copper, as the inlet baffle 46, and most preferably consisting of closely aligned finned copper pieces having a diameter of about 2.5 inches (6.35 cm), is situated directly above the 10°K to 22°K shroud surface 48 and below the flange opening 52 and preferably extends 0.50 to 1.0 inch (1.27 to 2.54 cm) on either side of said opening or alternatively 1.5 to 2.0 inches (3.81 to 5.08 cm) on either side of said opening. It is thus positioned to restrict gas flow from the vicinity of the 18°K surface 48 through flange opening exit port 52 and to equilibrate the cooled gas with the second cooling surface 48, thus enhancing the separation of nitrogen gas from the helium gas. Baffle 50 is directly connected to and part of the 80°K cooling surface 44 and serves to obstruct and minimize radiant energy from the flange area from impinging on the 18°K shroud surface 48. The flange 52 opening determines the exit tube size and preferably is not greater than about 1.5 inches (3.81 cm) in diameter. Thus, nitrogen gas is sorbed (frozen) on the surface 48 cooled to 10°K to 22°K, and preferably about 18°K to 20°K. The cryopump may be regenerated, when exhausted, by allowing the pump to warm up to release the sorbed gases.

To operate the system, the inlet valve 38 is closed, the system evacuated, and the cryopump cooed. The gas sample, comprising purified nitrogen and helium gas leaked from the test component, enters tube 40 through valve 38.

The cryopump is used to entrap the nitrogen gas that comes from the gas emanating at the test component, via the sniffer probe (Fig. 1) or from the gas surrounding the volume of the item under test (Fig. 4). The pressure is reduced in the cryopump by three (3) methods : namely (a) expansion, (b) internal cooling and (c) adsorption of gas upon the inner cooling surface 48 (10°K to 22°K shroud). In the expansion process, 5 atmospheric cc of gas is expanded into 5,000 cc giving a pressure reduction of 1,000. When the gas is cooled from 300°K to 80°K, the pressure reduction is 3.75 so the combination of pressure, gas expansion and temperature reduction, the pressure would be 2 × $10^{-1}$ mm of Hg (26.6 Pa).

A pressure of $10^{-4}$ mm of Hg (1.33 × $10^{-2}$ Pa) is necessary to operate the helium detector. This pressure reduction is further enhanced by the internal baffle means 46, 50 to cause the nitrogen gas to equilibrate with and impinge and stick on the second cooling surface 48 of the cryopump after the nitrogen gas is first cooled to about 80°K by equilibration with and cooling by contact with the 80°K first cooling surface 44 of the cryopump, said equilibration and cooling being enhanced by the entrance baffle 46 shielding the gas entrance port 42. Such equilibration markedly increases the effective sticking coefficient on the second cooling surface 48. Ideally, the sticking coefficient (nitrogen capture) would be 1.0 if every molecule that impinges sticks on the surface 48 which is about 15°K. In the real world, this is only approximated. The pressure measured in the leak detector when 1 atmospheric cc of gas is fed into the cryopump is 1.5 × $10^{-5}$ mm of Hg (2 × $10^{-3}$ Pa) and in about 2.5 seconds the pressure is 3 × $10^{-8}$ mm of Hg (4 × $10^{-6}$ Pa). The effective sticking coefficient through the pump is 99.93% and increases to 99.9991% in 2.5 seconds.

The improved pressure reduction results particularly from the baffle means consisting of the entrance baffle 46 and a modified exit baffle 50.

Fig. 3 presents a top view of the cryopump showing entrance baffle 46, the lead fins 47, the top cap 49 on the cryopump array and the heater 54 used to control the temperature on the cryopump surface 48.

Fig. 4 schematically represents a second embodiment of the container means comprising a component test chamber 4 containing sampling valve (probe) 38, test object 12 and chamber opening seal 6 to allow a new component to be inserted and tested. The test time per component can be as short as 2 seconds. Chamber 4 is preferably less than 5 cc in volume and test objects can range in volume from 0.01 cc to 0.40 cc.

Small components 12 travelling on a movable surface inside the nitrogen glove box can thus be leak checked by the sampling probe 38. In a preferred mode, the container means containing the probe totally envelopes the test object as it travels on a conveyor belt on a product assembly line. The container momentarily encloses the component to be tested and measures all the helium coming from the component. Components can be individually tested in this method very rapidly, i.e. rates as high as one a second if the component is as small as 0.01 to 0.1 cc. An additional benefit allows small components to be individually tested very rapidly as opposed to batch testing. Larger volume components can be checked in the glove box where the probe is moved around the object or test areas as in the Fig. 1 embodiment.

The invention is advantageous for the following reasons :

(a) It removes the atmospheric gases, primarily nitrogen gas, and allows all of the detecting gas helium to flow into the leak detector and be measured.

(b) In the continuous mode the gas continuously is sampled and analyzed.

(c) In the first embodiment, the probe can be manipulated within the test object compartment ; this allows many parts, especially small components, to be separately analyzed in a continuous fashion as opposed to a batch unit operation.

(d) In the second embodiment, separate small components can be tested as they move along a conveyor belt simply by change in design of the container and its internal probe. The probe can be in a cup-type container which envelops each test component as it moves rapidly along a production line ; in this instance the gas sampled is static.

(e) The cryopump gas separator is operated under about 1 atmosphere ($1.013 \times 10^5$ Pa) on the gas input side and at $10^{-4}$ Torr ($1.33 \times 10^{-2}$ Pa) or less at the exit port.

(f) Almost all of the nitrogen is removed and the gas passing to the mass spectrometer is essentially helium gas ; hence there is no need to divert only part of the gas stream for analysis or to remove helium as indicated in US-A-4,593,530.

(g) The pressure reduction is 760 Torr ($1.013 \times 10^5$ Pa) to less than $1.0 \times 10^{-5}$ Torr ($1.33 \times 10^{-3}$ Pa) (7 decades).

(h) The test object can be tested at atmospheric pressure in both static and dynamic embodiments.

(i) The effective nitrogen capture (sticking coefficient) on the second cooling surface is from 99.93% to 99.9991% in 2.5 seconds.

## Claims

1. An apparatus for detecting gas leakage from a test object (12), comprising container means (14) for receiving and enveloping test objects (12) containing helium, said container means (14) containing, in operation, purified nitrogen which surrounds the test object (12) ; conducting means in communication with the container means (14) for conducting a flow of helium and nitrogen from the container means (14) directly to a cryogenic pump separator means (16), the separator means (16) being arranged to receive all of the helium and nitrogen flowing through said conducting means and configured for separating the helium from the nitrogen and for retaining a sufficient quantity of the nitrogen to greatly increase the ratio of helium to nitrogen exiting the separator means (16) ; mass spectrometer means (18) connected for fluid communication with the separator means (16) for detecting the helium exiting from the separator means (16) and for providing an output signal indicative of the presence of and amount of helium if there is leakage of helium from the test object ; and a pump means (22, 24) connected in direct fluid communication with the mass spectrometer means (18) and which functions to exhaust the measured helium to the atmosphere ; characterised in that the conducting means comprises a movable sniffer probe (V1) or a probe (38) in a container means (14) which is a movable part which can be placed over the test object (12) carried on a conveyor means, for removing nitrogen, and helium if there is leakage, from the container means (14), the nitrogen in the container means (14) being at a pressure of about 1 atmosphere ($1.013 \times 10^5$ Pa), and in that said probe (V1, 38), said cryogenic pump separator means (16) and said mass spectrometer means (18) are connected in series.

2. The apparatus of claim 1 wherein said container means (14) is a glove box.

3. The apparatus of claim 1 or 2 wherein said pump means (22, 24) comprises an evacuation pump.

4. The apparatus as claimed in claim 3 wherein said evacuation pump comprises a turbo pump (22) and a mechanical pump (24).

5. The apparatus as claimed in any preceding claim wherein said cryogenic pump (16) is arranged to be operated at a temperature from about 10°K to about 22°K, and is configured for reducing the pressure of said nitrogen by expansion, cooling and adsorption.

6. The apparatus as claimed in claim 5 wherein said cryogenic pump (16) has a heater (54), has lead on at least a portion of its interior surfaces (47, 48) and is free of helium entrapping material.

7. The apparatus of claim 5 wherein said cryogenic pump (16) comprises a housing (36) defining a chamber ; a first cooling surface (44) (which in operation is maintained at about 80°K) disposed interiorly to said housing ; a second cooling surface (48) (which in operation is maintained at about 10°K to 22°K) disposed interiorly to said first cooling surface (44) for adbsorbing and thereby separating said nitrogen from said helium gases, a gas entrance port (42) defined by an inlet tube (40) extending from exterior of said housing (36) to interior of said first cooling surface (44) and a gas exit port defined by openings (50, 52) in said first cooling surface (44) and said housing (36) for enabling a mixture of nitrogen and helium gases to enter the cryogenic pump (16) at the entrance port (42) and helium gas to leave via the exit port (52) ; a first baffle means (46) disposed interiorly of said first cooling surface (44) and adjacent said entrance port (42) for directing the entering gases to impinge upon the first cooling surface (44) before impinging upon the second cooling surface (48) ; and a second baffle means (50) located between the exit port (52) and the second cooling surface (48) for increasing the residence time of the nitrogen gas in the vicinity of the second cooling surface (48) thereby enhancing separation of said nitrogen gas from said helium gas.

8. The apparatus of claim 7 wherein said first baffle means (46) and said second baffle means (50) are fabricated of copper.

9. The apparatus of claim 7 wherein said second baffle means (50) and said outlet port (52) are sized whereby the gaseous conductance through said second baffle means (50) and through said outlet port (52) are substantially the same.

10. The apparatus of claim 9 wherein said second baffle means (50) comprises a plurality of baffle plates arranged to overlap each other for reducing the influx of radiant energy to said second cooling surface (48) and for increasing the residence time of said nitrogen gas in the vicinity of said second cooling surface (48).

11. The apparatus of claim 7 further comprising a shim (49) positioned between said first cooling surface (44) and said inlet tube (40) for providing thermal insulation and gaseous isolation.

12. A process for detecting gas leakage from a test object (12) using apparatus according to any preceding claim, comprising purging the container means (14) by introducing nitrogen, introducing the test object (12) containing helium into the container means (14), removing gas in the vicinity of the object with the probe (V1, 38) and passing it through the separator means (16) where the ratio of helium, if any, to nitrogen is greatly increased, and to the mass spectrometer means (18) which detects the presence of helium, and thereafter exhausting any helium from the mass spectrometer means (18) to atmosphere using the pump means (22, 24).

13. A process as claimed in claim 12, wherein said cryogenic pump (16) is operated at a temperature from about 10°K to 22°K, the pressure in said cryopump is reduced by a factor of approximately 1,000 by expansion, by a factor of approximately 4 by cooling and by a factor of approximately 6,000 by absorption of nitrogen gas on said cryopump cooling surfaces (44, 48).

14. A process as claimed in claim 12 wherein said cryogenic pump (16) is operated at a temperature from about 10°K to about 22°K, and the pressure in the leak detector separator on expansion of about 5 atmosphere cc of gas into a volume of 5,000 cc is initially about $1.5 \times 10^{-5}$ mm Hg ($2 \times 10^{-3}$ Pa) decreasing to $3 \times 10^{-8}$ mm Hg ($4 \times 10^{-6}$ Pa) in about 2.5 seconds.

15. A process according to claim 14 where all gas entering the cryogenic pump (16) is first directed to impinge on and equilibrate with an 80°K cooling surface (44) before being cryopumped on the 10°K to 22°K cooling surface (48).

**Patentansprüche**

1. Vorrichtung zum Erfassen eines Gaslecks aus einem Testgegenstand (12) mit einer Behältereinchtung (14), um Testgegenstände (12), die Helium enthalten, aufzunehmen und einzuhüllen, wobei die Behältereinrichtung (14) im Betrieb gereinigten Stickstoff enthält, der den Testgegenstand (12) umgibt, eine Leitungseinrichtung in Verbindung mit der Behältereinrichtung (14) steht, um einen Strom von Helium und Stickstoff aus der Behältereinrichtung (14) direkt zu einer Kryopumpenabtrenneinrichtung (16) zu führen, wobei die Abtrenneinrichtung (16) so angeordnet ist, daß sie das gesamte Helium und den Stickstoff aufnimmt, der durch die Leitungseinrichtung strömt und so ausgestaltet ist, daß sie das Helium von dem Stickstoff abtrennt und daß sie eine ausreichende Menge des Stickstoffes zurückhält, um das Verhältnis von Helium zu Stickstoff, welche aus der Abtrenneinrichtung (16) herauskommen, stark zu vergrößern, wobei eine Massenspektrometereinrichtung (18) in Fließverbindung mit der Abtrenneinrichtung (16) steht, um das aus der Abtrenneirichtung (16) austretende Helium zu erfassen und um ein Ausgangssignal bereitzustellen, welches eine Anzeige für die Anwesenheit und für die Menge des Heliums ist, falls eine Heliumleckage aus dem Testgegenstand vorliegt, und wobei eine Pumpeinrichtung (22, 24) in direkter Fließverbindung mit der Massenspektrometereinrichtung (18) steht, und welche so funktioniert, daß sie das gemessene Helium in die Atmosphäre abgibt, dadurch gekennzeichnet, daß die Leitungseinrichtung eine bewegliche Schnüffelsonde (V1) oder eine Sonde (38) in einer Behältereinrichtung (14) aufweist, die ein beweglicher Teil ist, welcher über dem Testgegenstand (12) angeordnet ist, welches von einer Transporteinrichtung getragen wird, zum Entfernen des Stickstoffs und, falls es ein Leck gibt, des Heliums aus der Behältereinrichtung (14), wobei der Stickstoff in der Behältereinrichtung (14) sich bei einem Druck von etwa einer Atmosphäre ($1{,}013 \times 10^5$ Pa) befindet und daß die Sonde (V1, 38), die Kryopumpenabtrenneinrichtung (16) und die Massenspektrometereinrichtung (18) in Reihe angeschlossen sind.

2. Vorrichtung nach Anspruch 1, wobei die Behältereinrichtung (14) eine Handschuhbox ist.

3. Vorrichtung nach Anspruch 1 oder 2, wobei die Pumpeinrichtung (22, 24) eine Vakuumpumpe aufweist.

4. Vorrichtung nach Anspruch 3, wobei die Vakuumpumpe eine Turbopumpe (22) und eine mechanische Pumpe (24) aufweist.

5. Vorrichtung nach einem der vorstehenden Ansprüche, wobei die Kryopumpe (16) so angeordnet ist, daß sie bei einer Temperatur von etwa 10°K bis etwa 22°K betreibbar ist und so ausgestaltet ist, daß sie den Druck des Stickstoffs durch Expansion, Kühlung und Adsorption verringert.

6. Vorrichtung nach Anspruch 5, wobei die Kryopumpe (16) einen Heizer (54) aufweist, der zumindest an einem Teil seiner inneren Oberflächen (47, 48) Blei hat und frei von Material ist, welches Helium einfängt.

7. Vorrichtung nach Anspruch 5, wobei die Kryopumpe (16) ein Gehäuse (36) aufweist, welches eine Kammer definiert, eine erste Kühlfläche (44) (welche im Betrieb bei etwa 80°K gehalten wird) hat, die im Inneren des Gehäuses angeordnet ist, eine zweite Kühlfläche (48) (welche im Betrieb bei etwa 10°K bis 22°K gehalten wird) hat, die innerhalb der ersten Kühloberfläche (44) angeordnet ist, um Stickstoff zu adsorbieren und damit von den Heliumgasen abzutrennen, einen Gaseintrittsanschluß (42) hat, der durch ein Einlaßrohr (40) (bzw. Schlauch) definiert wird, welcher sich von der Außenseite des Gehäuses (36) in das Innere der ersten Kühloberfläche (44) erstreckt, sowie einen Gasausgangsanschluß hat, welcher durch die Öffnungen (50, 52) in der ersten Kühloberfläche (44) und dem Gehäuse (36) definiert wird, um zu ermöglichen, daß eine Mischung aus Stickstoff und Heliumgas in die Kryopumpe (16) an dem Eingangsanschluß (42) eintritt und das Heliumgas durch den Ausgangsanschluß (52) austritt, daß eine erste Zwischenwandeinrichtung (46) innerhalb der ersten Kühloberfläche (44) und an dem Eingangsanschluß (42) angeordnet ist, um die eintretenden Gase so zu leiten, daß sie auf die erste Kühloberfläche (44) auftreffen, bevor sie auf die zweite Kühloberfläche (48) auftreffen, und daß eine zweite Zwischenwandeinrichtung (50) zwischen dem Ausgangsanschluß (52) und der zweiten Kühloberfläche (48) angeordnet ist, um die Verweilzeit des Stickstoffgases in der Nähe der zweiten Kühloberfläche (48) zu vergrößern und damit die Abtrennung des Stickstoffgases von dem Heliumgas zu steigern.

8. Vorrichtung nach Anspruch 7, wobei die erste Zwischenwandeinrichtung (46) und die zweite Zwischenwandeinrichtung (50) aus Kupfer hergestellt sind.

9. Vorrichtung nach Anspruch 7, wobei die zweite Zwischenwandeinrichtung (50) und der Ausgangsanschluß (52) so bemessen sind, daß die Gasleitfähigkeit durch die zweite Zwischenwandeinrichtung (50) und durch den Auslaßanschluß (52) im wesentlichen gleich sind.

10. Vorrichtung nach Anspruch 9, wobei die zweite Zwischenwandeinrichtung (50) eine Mehrzahl von Zwischenwandplatten (Abfangplatten) aufweist, welche so angeordnet sind, daß sie einander überlappen, um das Einströmen von Strahlungsenergie auf die zweite Kühloberfläche (48) zu reduzieren, und um die Verweilzeit des Stickstoffgases in der Nähe der zweiten Kühloberfläche (48) zu vergrößern.

11. Vorrichtung nach Anspruch 7, welche weiterhin eine Einlage (49) aufweist, die zwischen der ersten Kühlobenfläche (44) und dem Einlaßrohr (40) angeordnet ist, um eine thermische Isolation und eine Gasisolation bereitzustellen.

12. Verfahren zum Erfassen eines Gaslecks aus einem Testgegenstand (12) unter Verwendung einer Vorrichtung gemäß einem der vorstehenden Ansprüche, welches aufweist: Reinigen der Behältereinrichtung (14) durch Eingabe von Stickstoff und Eingeben des Testgegenstandes (12), welcher Helium enthält, in die Behältereinrichtung (14), Entnehmen von Gas in der Nähe des Gegenstandes mit der Sonde (V1, 38) und Leiten desselben durch die Abtrenneinrichtung (16), wobei das Verhältnis von Helium, sofern welches vorhanden ist, zu Stickstoff stark vergrößert wird, und zu der Massenspektrometereinrichtung (18) hin, welche die Gegenwart von Helium erfaßt, und danach Ausstoß von Helium aus der Massenspektrometereinrichtung (18) in die Atmosphäre unter Verwendung der Pumpeinrichtung (22, 24).

13. Verfahren nach Anspruch 12, wobei die Kryopumpe (16) bei einer Temperatur von etwa 10°K bis 20°K betrieben wird, der Druck in der Kryopumpe um einen Faktor von näherungsweise 1000 durch Expansion reduziert wird, um einen Faktor von etwa 4 durch Kühlung und um einen Faktor von näherungsweise 6000 durch Absorption des Stickstoffgases an den Kühloberflächen (44, 48) der Kryopumpe.

14. Verfahren nach Anspruch 12, wobei die Kryopumpe (16) bei einer Temperatur von etwa 10°K bis etwa 22°K betrieben wird und der Druck in dem Separator des Leckdetektors aufgrund von Expansion von etwa 5 Atmosphären cm³ von Gas in ein Volumen von 5000 cm³ anfänglich auf etwa $1,5 \times 10^{-5}$ mm Hg ($2 \times 10^{-3}$ Pa) beträgt, auf $3 \times 10^{-8}$ mm Hg ($4 \times 10^{-6}$ Pa) in etwa 2,5 Sekunden reduziert wird.

15. Verfahren nach Anspruch 14, wobei das gesamte, in die Kryopumpe (16) eintretende Gas zuerst so geleitet wird, daß es auf eine Kühloberfläche (44) von 80°K auftrifft und mit dieser ins Gleichgewicht kommt, bevor es an der Kühloberfläche (48) mit 10°K bis 22°K dem Kryopumpen ausgesetzt wird.

**Revendications**

1. Appareil pour détecter les fuites de gaz d'un objet à contrôler (12) comprenant des moyens conteneurs (14) pour recevoir et envelopper les objets à contrôler (12) contenant de l'hélium, lesdits moyens conteneurs (14) contenant en fonctionnement, de l'azote purifié, qui entoure l'objet à contrôler (12) ; des moyens conducteurs qui sont en communication avec les moyens conteneurs (14) pour conduire directement un courant d'hélium et d'azote des moyens conteneurs (14) à des moyens séparateurs (16) comportant une pompe cryogénique, les moyens séparateurs (16) étant agencés pour recevoir la totalité de l'hélium et de l'azote qui circule dans lesdits moyens conducteurs et étant configurés pour séparer l'hélium de l'azote et pour retenir une quantité d'azote suffisamment grande pour accroître considérablement le rapport de l'hélium à l'azote qui sort des moyens séparateurs (16) ; des moyens du type spectromètre de masse (18), reliés en communication fluidique aux moyens séparateurs (16), pour détecter l'hélium qui sort de ces derniers et pour fournir un signal de sortie indicatif de la présence d'hélium et de la quantité d'hélium s'il y a une fuite d'hélium sortant de l'objet à contrôler ; et des moyens du type pompe (22, 24) mis en communication fluidique directe avec les moyens du type spectromètre de masse (18), et qui ont pour fonction de rejeter l'hélium mesuré dans l'atmosphère, caractérisé en ce que les moyens conducteurs comprennent une sonde renifleuse mobile (V1), ou une sonde (38) contenue dans un moyen conteneur (14) qui constitue une partie mobile qui peut être placée au-dessus de l'objet à contrôler (12) transporté par des moyens transporteurs, pour extraire l'azote, et l'hélium s'il y a fuite, du moyen conteneur, l'azote contenu dans le moyen conteneur étant à une pression d'environ 1 atmosphère ($1,013 \times 10^5$ Pa) et en ce que ladite sonde (V1, 38), lesdits moyens séparateurs (16) à pompe cryogénique et lesdits moyens du type spectromètre de masse (18) sont connectés en série.

2. Appareil selon la revendication 1, caractérisé en ce que lesdits moyens conteneurs (14) sont constitués par une boite à gants.

3. Appareil selon l'une des revendications 1 et 2, caractérisé en ce que lesdits moyens du type pompe (22, 24) comprennent une pompe à vide.

4. Appareil selon la revendication 3, caractérisé en ce que ladite pompe à vide comprend une turbopompe (22) et une pompe mécanique (24).

5. Appareil selon l'une des revendications précédentes, caractérisé en ce que ladite pompe cryogénique (16) est agencée pour être mise en action à une température comprise entre environ 10°K et environ 22°K et elle est configurée pour réduire la pression dudit azote par détente, refroidissement et adsorption.

6. Appareil selon la revendication 5, caractérisé en ce que ladite pompe cryogénique (16) possède un élément chauffant (54), comporte du plomb sur au moins une partie de ses surfaces intérieures (47, 48) et ne comporte pas de matières pouvant piéger l'hélium.

7. Appareil selon la revendication 5, caractérisé en ce que ladite pompe cryogénique (16) comprend un boîtier (36) définissant une chambre ; une première surface de refroidissement (44) disposée intérieurement audit boîtier et qui, en fonctionnement, est maintenue à environ 80°K ; une deuxième surface de refroidissement (48) disposée intérieurement à ladite première surface de refroidissement (44) pour adsorber et de cette façon séparer l'azote dudit gaz hélium qui, en fonctionnement, est maintenue à environ 10°K-22°K, un orifice d'entrée de gaz (42) défini par un tube d'entrée (40) qui s'étend de l'extérieur dudit boîtier (36) à l'intérieur de ladite première surface de refroidissement (44) et un orifice de sortie de gaz défini par des ouvertures (50, 52) pratiquées dans ladite première surface de refroidissement (44) et dans ledit boîtier (36) pour permettre à un mélange de gaz azote et hélium de pénétrer dans la pompe cryogénique (16) au droit de l'orifice d'entrée (42) et au gaz hélium de sortir à travers l'orifice de sortie (52) ; une première chicane (46) disposée intérieurement à ladite première surface de refroidissement (44) et adjacente audit orifice d'entrée (42) pour diriger les gaz entrant de façon qu'ils frappent la première surface de refroidissement (44) avant de frapper la deuxième surface de refroidissement (48) ; et une deuxième chicane (50) placée entre l'orifice de sortie (52) et ladite deuxième surface de refroidissement (48) pour allonger le temps de séjour du gaz azote dans le voisinage de la deuxième surface de refroidissement (48), afin de renforcer la séparation entre le gaz azote et le gaz hélium.

8. Appareil selon la revendication 7, caractérisé en ce que ladite première chicane (46) et ladite deuxième chicane (50) sont fabriquées en cuivre.

9. Appareil selon la revendication 7, caractérisé en ce que ladite deuxième chicane (50) et ledit orifice de sortie (52) sont dimensionnés de telle manière que la conductance gazeuse à travers la deuxième chicane (50) et celle à travers ledit orifice de sortie (52) soient sensiblement identiques.

10. Appareil selon la revendication 9, caractérisé en ce que ladite deuxième chicane (50) comprend une pluralité de plaques de chicane agencées pour se recouvrir mutuellement afin de réduire l'influx d'énergie radiante sur ladite deuxième surface de refroidissement (48) et pour allonger le temps de séjour dudit gaz azote dans le voisinage de ladite deuxième surface de refroidissement (48).

11. Appareil selon la revendication 7, caractérisé en ce qu'il comprend en outre une entretoise (49) positionnée entre ladite première surface de refroidissement (44) et ledit tube d'entrée (40) de manière à établir une isolation thermique et une séparation des gaz.

12. Procédé pour détecter les fuites de gaz d'un objet (12) à contrôler, en utilisant un appareil selon l'une des revendications précédentes, caractérisé en ce qu'il consiste à purger les moyens conteneurs (14) en introduisant de l'azote, à introduire l'objet à contrôler (12) qui contient de l'hélium dans les moyens conteneurs (14), à prélever le gaz dans le voisinage de l'objet, à l'aide de la sonde (V1, 38) et à le faire passer à travers les moyens séparateurs, dans lesquels le rapport de l'hélium, éventuellement présent, à l'azote, est considérablement augmenté, et dans les moyens du type spectromètre de masse (18) qui détectent la présence d'hélium et à rejeter ensuite l'hélium éventuellement présent du spectromètre de masse (18) dans l'atmosphère à l'aide des moyens du type pompe (22).

13. Procédé selon la revendication 12, caractérisé en ce que ladite pompe cryogénique (16) est mise en action à une température comprise entre environ 10°K et 22°K, la pression intérieure de ladite pompe cryogénique étant réduite par un facteur d'environ 1000 par détente, d'un facteur d'environ 4 par refroidissement et d'un facteur 6000 par absorption du gaz azote sur lesdites surfaces de refroidissement (44, 48) de la pompe cryogénique.

14. Procédé selon la revendication 12, caractérisé en ce que ladite pompe cryogénique (16) est mise en action à une température d'environ 10°K à environ 22°K et la pression dans le séparateur détecteur de fuites à la suite de la détente d'environ 5 $cm^3$ atmosphérique de gaz en un volume de 5000 $cm^3$ est initialement d'environ $1{,}5 \times 10^{-5}$ mm de Hg ($2 \times 10^{-3}$ Pa) et tombe à $3 \times 10^{-8}$ mm de Hg ($4 \times 10^{-6}$ Pa) en environ 2,5 secondes.

15. Procédé selon la revendication 14, caractérisé en ce que la totalité du gaz qui entre dans la pompe cryogénique (16) est tout d'abord dirigée pour frapper une surface de refroidissement (44) à 80°K et s'équilibrer avec cette surface avant d'être pompée par la pompe cryogénique sur la surface de refroidissement (48) à 10°K-22°K.

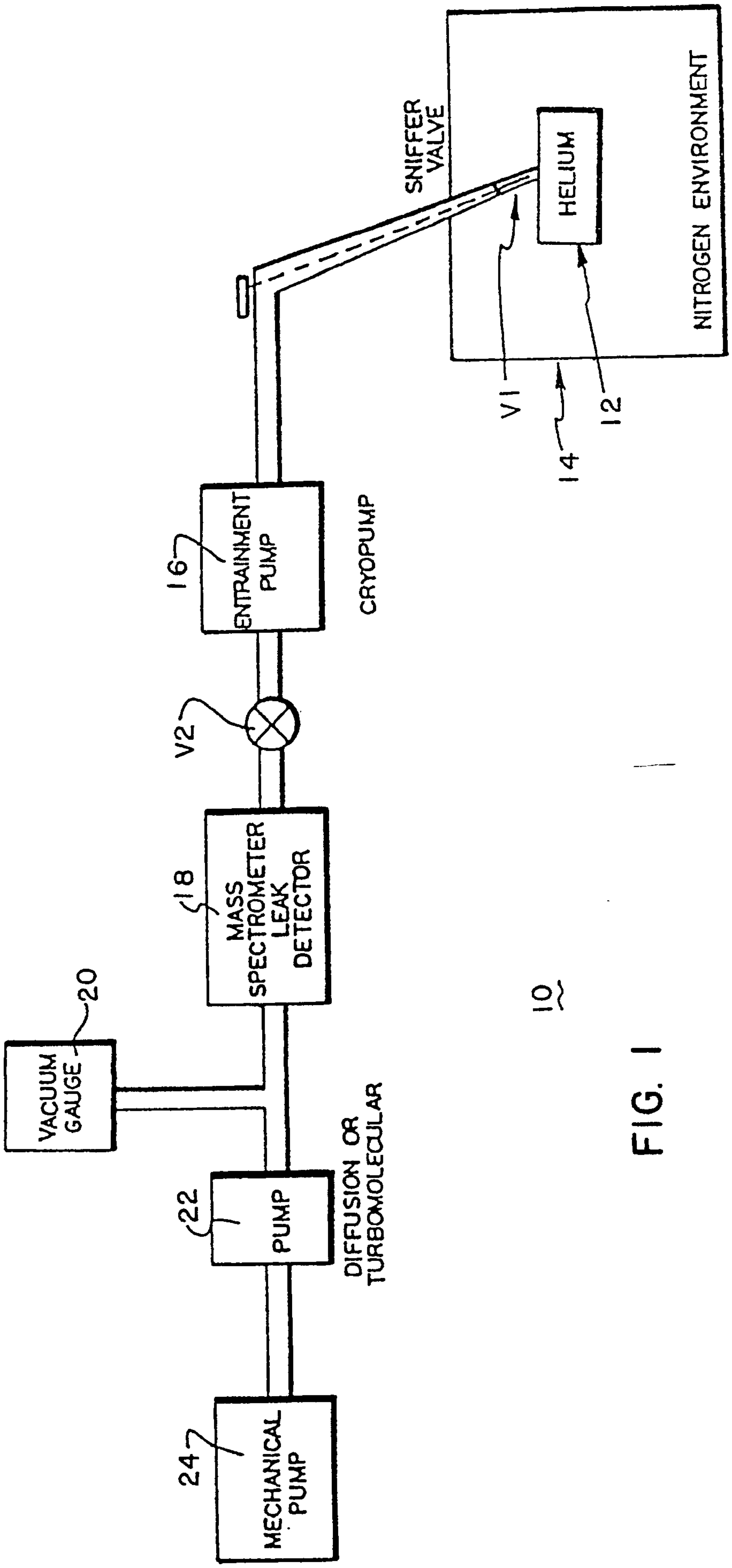
SNIFFER VALVE
HELIUM
NITROGEN ENVIRONMENT
V1
12
14
ENTRAINMENT PUMP
16
CRYOPUMP
V2
MASS SPECTROMETER LEAK DETECTOR
18
VACUUM GAUGE
20
PUMP
22
DIFFUSION OR TURBOMOLECULAR
MECHANICAL PUMP
24
10

FIG. 1

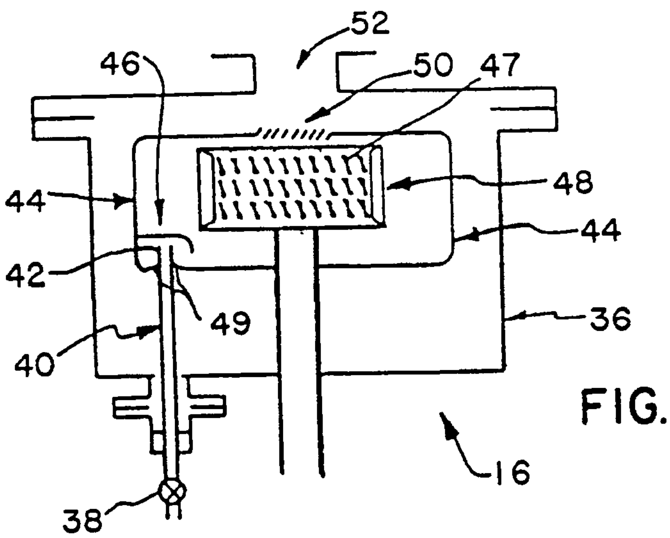


FIG. 2

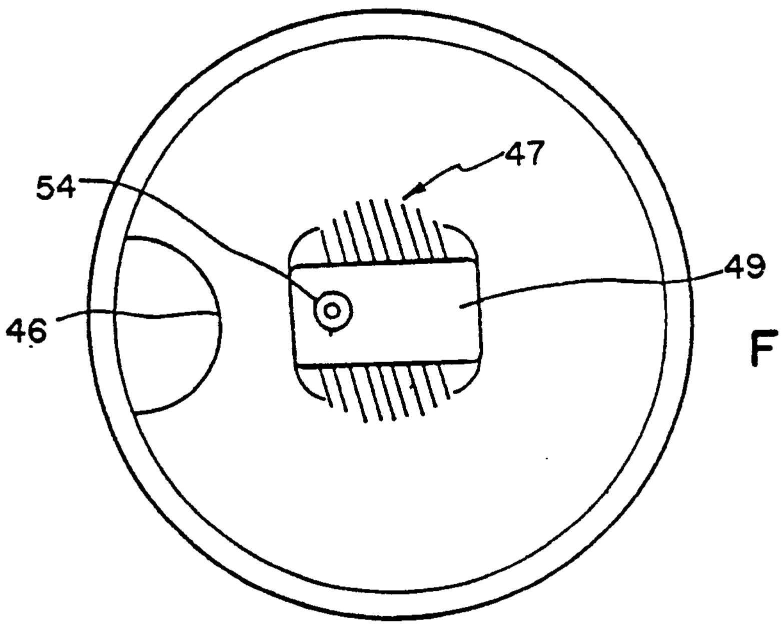


FIG. 3

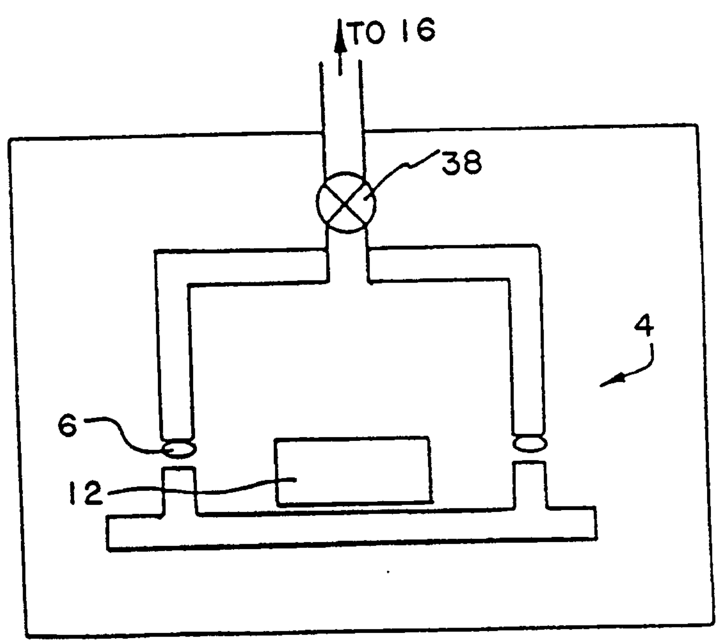


FIG. 4